# FASCICULE DE BREVET EUROPEEN

(11) **EP 1 663 781 B1**
(45) Date de publication et mention de la délivrance du brevet: **25.04.2012**
(21) Numéro de dépôt: 03789512.5
(22) Date de dépôt: 27.11.2003
(51) Int. Cl.: B64D 11/06, B60N 2/34

(54) **SIEGE CONVERTIBLE DESTINE A RECEVOIR UN PASSAGER D AERONEF**
VERSTELLBARER SITZ MIT SCHLAFPOSITION ZUM EINSATZ IN FLUGZEUGEN
CONVERTIBLE CHAIR FOR ACCOMMODATING AN AIRCRAFT PASSENGER

(30) Priorité: 26.09.2003 FR 0311330
(43) Date de publication de la demande: 07.06.2006
(73) Titulaire: Airbus, 31707 Blagnac (FR)
(72) Inventeur: SAINT-JALMES, Bruno, F-31400 Toulouse (FR); REZAG, André, 17, rue Maurice Melat, F- 31200 Toulouse (FR); ZANEBONI, Jason, F-31000 Toulouse (FR)
(74) Mandataire: Santarelli
(86) Numéro de dépôt international: PCT/FR2003/003501
(87) Numéro de publication internationale: WO 2005/035360

(56) Documents cités:
- EP-A- 1 116 654
- WO-A-00/21831
- WO-A-96/18537
- WO-A-03/013903
- DE-U1- 29 702 660
- KR-A- 20030 043 903
- US-A- 5 718 479
- US-B1- 6 371 556

## Description

La présente invention concerne un siège convertible destiné à recevoir un passager d'aéronef et plus particulièrement, mais non exclusivement, un tel siège destiné à être entouré par une paroi délimitant l'espace autour du siège destiné à la personne voyageant sur ce siège.

Dans les aéronefs destinés à réaliser des trajets long courrier, plusieurs classes de confort sont généralement proposées aux passagers. A chaque classe de confort correspond généralement un type de siège. Ainsi il y a généralement pour la classe de plus grand confort des sièges convertibles en lit et permettant donc aux voyageurs de dormir en position allongée. Il existe également des sièges présentant un dossier et un repose-pieds inclinables comme révélé dans les documents EP-1 103 412 et EP-1 013 545. Enfin on trouve aussi des sièges, en général sans repose-pieds, dont seul le dossier est légèrement inclinable.

En fonction de la classe de confort, l'espace réservé à un passager varie. Pour des raisons de confort et de sécurité, il ne faut pas que le siège d'un passager vienne empiéter de façon trop importante sur l'espace réservé à un passager voisin, notamment le passager occupant le siège placé derrière ledit siège. Ainsi quand les sièges sont relativement proches les uns des autres, l'inclinaison du dossier ne peut être que de quelques degrés. Quand les sièges sont plus espacés, l'inclinaison du dossier peut être plus importante. Dans ce dernier cas, l'inclinaison est limitée en fonction de la distance séparant l'extrémité libre du siège par rapport à l'arrière de l'assise, Ainsi, à titre d'exemple numérique, on peut prévoir en fonction du pas séparant deux rangées de sièges qu'un siège ne doit pas par exemple pas empiéter de plus de 60 cm sur l'espace laissé à l'avant du siège se trouvant derrière lui et ceci correspond alors par exemple à une Inclinaison du dossier de 130°.

Dans les compartiments d'un aéronef proposant un siège convertible en lit, il est connu pour augmenter le confort des passagers de ce compartiment d'entourer le siège d'une paroi isolant la personne voyageant sur le siège du reste du compartiment. Un siège qui se convertit en lit en pivotant simplement le dossier et le repose-pieds pour amener ceux-ci dans le plan de l'assise n'est pas adapté à une telle configuration de compartiment car un espace important est perdu à l'arrière de chaque siège.

Pour résoudre ce problème, le document WO-96/18537 propose un siège convertible en lit que l'on trouve sur des aéronefs de certaines compagnies aériennes. Ce siège est réalisé sur un châssis qui est monté coulissant par rapport au sol de la cabine de l'aéronef dans laquelle il se trouve. Pour alors passer de la configuration fauteuil pouvant accueillir un passager en position assise à la configuration lit pour accueillir un passager en position couchée, un moteur fait coulisser le châssis mobile tandis que d'autres moteurs agissent notamment sur le dossier et le repose-pieds pour amener ceux-ci sensiblement dans le plan de l'assise du siège.

Un tel siège permet aux passagers de voyager dans des conditions de confort optimales. Toutefois, les sièges décrits dans ce document présentent un poids très élevé, ce qui pénalise la compagnie aérienne en terme de nombre de passagers et de bagages pouvant être embarqués à bord de l'aéronef.

Le document KR-20030043903 montre un siège couchette qui est, de manière générale, adapté à divers équipements de transport tels qu'un train, un bateau, une ligne express et un avion ainsi qu'une automobile et un omnibus, présentant un siège avant et arrière. Le dos du siège avant présente une cloison supérieure de dossier de siège et une partie de fixation inférieure de dossier de siège, la cloison supérieure du dossier de siège est formée pour être divisée en deux de manière à former un panneau de séparation avant et un panneau de séparation arrière, pour se déplier horizontalement par développement en avant ou en arrière ou pour se relever par pliage et assemblage des panneaux, le dos du siège arrière formant une concavité permettant de poser la tête d'un passager. Ainsi, lorsque les panneaux de séparation avant et arrière sont développés horizontalement, on obtient une surface de lit plane, de sorte qu'un passager peut s'allonger dans le siège confortablement. Il est ici nécessaire d'avoir un siège avant et un siège arrière, soit deux sièges, pour réaliser le couchage d'un passager.

Le document WO-03/013903 révèle des sièges et des places de couchage Individuels et autonomes pour des passagers d'aéronef. Un siège révélé par ce document comprend une structure de support soutenant le siège au-dessus du plancher du véhicule et une pluralité de surfaces de support de passager sur ladite structure de support pour former un siège pour le passager, et des moyens permettant de faire passer le siège dans une configuration de lit dans laquelle une pluralité de surfaces de support sont disposées de manière sensiblement coplanaire et sensiblement contiguë, de sorte à former un lit pour le passager. Le siège révélé dans ce document de l'art antérieur, comporte au moins un élément mobile à double face, cet élément comprenant une première et une deuxième face opposées, une desdites faces présentant une première surface de siège qui forme une partie du siège dans ladite configuration de siège, l'autre face présentant une deuxième surface de lit qui forme une partie dudit lit dans ladite configuration de lit. L'assise du siège vient s'escamoter lorsque le siège passe de sa position prévue pour recevoir un passager assis à sa configuration de lit pour se retrouver sous la surface de couchage proposée dans la configuration de lit.

Le document DE-297 02 660 U1 divulgue un ensemble de sièges transformables en lit destiné à des véhicules tels un camping-car ou une caravane. Dans ce document, il est décrit comment deux sièges en vis-à-vis peuvent être transformés en un lit en rabattant les dossiers des lits de sièges.

La présente invention a alors pour but de fournir un siège convertible en lit dont la masse est réduite. De préférence, lorsque se siège passe de sa configuration prévue pour recevoir un passager assis à sa configuration prévue pour recevoir ce passager en position couchée, ou Inversement, Il convient que le siège reste dans les limites spatiales définies par une paroi placée autour du siège et définissant l'espace alloué au passager durant le vol,

A cet effet, elle propose un siège convertible destiné à recevoir un passager d'aéronef, comportant un châssis, une assise fixe portée par le châssis et un dossier, ce siège pouvant passer d'une position dite assise dans laquelle le dossier forme un angle avec l'assise supposée horizontale à une position dite couchée dans laquelle il présente une surface sensiblement plane destinée à accueillir le passager en position couchée, ledit siège comportant, d'une part, des moyens de guidage pour faire passer le dossier de sa position assise vers une position sensiblement horizontale et, d'autre part, au moins un supplément de couchette coopérant avec le dossier pour former la surface sensiblement plane destinée à recevoir le passager en position couchée ; dans sa position couchée le dossier recouvre la majeure partie de l'assise, et le supplément de couchette prend une position sensiblement horizontale dans le prolongement du dossier, vers l'avant, lorsque le siège est en position couchée.

Selon l'invention, lesdits moyens de guidage permettent lors du passage du siège de la position assise à la position couchée de guider le dossier selon un mouvement qui est la combinaison d'une translation longitudinale et d'une rotation autour d'un axe sensiblement transversal et horizontal.

Le châssis est ici la structure, le plus souvent métallique, qui porte les divers composants du siège et qui doit encaisser les efforts auxquels sont soumis ces composants et le passager en cas de sollicitations mécaniques. En gardant ce châssis fixe, le gain de poids réalisé peut être sensible. En effet compte tenu de l'importance des efforts auxquels doit pouvoir résister la structure du siège, le mécanisme permettant de déplacer cette structure doit pouvoir reprendre ces efforts et doit donc être renforcé, ce qui implique une masse supplémentaire importante.

Le dossier est utilisé pour réaliser la surface de couchage avec un supplément de couchette qui ne comprend pas forcément l'assise et/ou un éventuel repose-pieds

Lorsque le dossier présente une base et une extrémité libre, alors les moyens de guidage du siège comportent avantageusement des moyens de guidage en translation de la base du dossier. Une telle translation permet d'exploiter au mieux l'espace disponible pour un passager et ainsi de convertir le siège en lit sans avoir à empiéter sur l'espace destiné à un autre passager.

Le siège comporte avantageusement des moyens de guidage permettant lors du passage du siège de la position assise à la position couchée de guider le dossier de telle sorte que le dossier en position couchée vienne recouvrir par exemple l'assise, et un bord du dossier en position couchée choisi dans l'ensemble comprenant la base du dossier et son extrémité libre est de préférence sensiblement superposée à un bord de l'assise.

Ces moyens de guidage comportent par exemple de part et d'autre du châssis au moins un rail de guidage de manière à guider la base du dossier lors du passage de la position 088186 à la position couchée depuis la position correspondant à l'arrière de l'assise en position assise à une position correspondant à l'avant de l'assise en position assise.

Dans une autre variante de réalisation, ces moyens de guidage comportent de part et d'autre du châssis au moins un rail de guidage de manière à guider la base du dossier lors du passage de la position assise à la position couchée depuis la position correspondant à l'arrière de l'assise en position assise à une position reculée de telle sorte que lorsque la base du dossier se trouve dans cette position reculée l'extrémité libre du dossier se trouve dans une position correspondant à l'avant de l'assise en position assise.

Une forme de réalisation préférée prévoit que le dossier du siège selon l'invention est relié à une partie fixe du siège par l'intermédiaire de deux leviers se trouvant de part et d'autre de l'assise, que chaque levier est monté pivotant autour d'un axe sensiblement horizontal et transversal par rapport à ladite partie fixe, et que le dossier est monté pivotant autour d'un axe sensiblement horizontal et transversal entre les deux leviers. Cette forme de réalisation permet une manipulation aisée du dossier pour le faire passer de sa position sensiblement verticale à sa position sensiblement horizontale ou inversement. De plus, cette solution technique est simple et d'un prix de revient peu élevé, L'assise est par exemple fixée sur le châssis constituant ainsi une partie fixe du siège et les leviers peuvent alors être montés sur les cotés latéraux de l'assise. Pour épouser la forme du siège et ne pas former de partie saillante, notamment lorsque le siège est en position assise, les leviers présentent avantageusement une forme de L. Afin de faciliter le pivotement du dossier, les deux leviers sont avantageusement reliés par une platine, Cette dernière permet de rigidifier l'ensemble mobile comportant le dossier. Pour chaque levier la distance entre l'axe de pivotement du levier par rapport à ladite partie fixe et l'axe de pivotement du dossier est par exemple comprise entre la moitié et les trois quarts de la longueur, dans le sens longitudinal, de l'assise.

On prévoit de préférence, dans ces différentes formes de réalisation décrites plus haut, des moyens de serrage et/ou verrouillage qui maintiennent le dossier dans sa position relevée lorsque le siège est dans sa position dite assise,

Le dossier étant utilisé pour former la surface plane destinée à recevoir le passager couché, le supplément de couchette coopérant avec le dossier pour former une surface plane comporte par exemple une tablette mobile entre une position sensiblement horizontale dans le prolongement vers l'avant du dossier lorsque le siège est en position couchée et une position sensiblement verticale latérale dans la position assise. La surface de couchage sensiblement plane peut alors être constituée du dossier en position sensiblement horizontale et de ladite tablette mobile. Dans une variante par contre, en position couchée, ladite tablette mobile coopère par exemple avec le dossier et un équipement disposé en regard et à distance du châssis et dont la hauteur correspond sensiblement à celle de l'assise du siège.

Une autre forme de réalisation prévoit qu'il comporte un repose-pieds monté pivotant autour d'un axe transversal situé à proximité de son bord avant de manière à pouvoir pivoter d'environ 90° et se retrouver alors sensiblement dans le prolongement du dossier en position couchée. Les moyens coopérant avec le dossier pour former une surface plane comportent alors par exemple le repose-pieds pivoté ainsi qu'un équipement disposé en regard et à distance du châssis et dont la hauteur correspond sensiblement à celle de l'assise du siège.

Ledit équipement peut aussi comporter un rabat mobile pouvant pivoter d'environ 180° autour d'un axe sensiblement transversal et horizontal de manière à former un supplément de couchette.

Une variante avantageuse prévoit que le dossier intègre un supplément de couchette. Ce dernier est monté par exemple coulissant, ou bien pivotant, par rapport au dossier.

La présente Invention concerne tout particulièrement un siège convertible tel que décrit plus haut et caractérisé en ce qu'il comporte en outre une paroi latérale entourant notamment l'arrière du siège.

Dans un tel siège, un coffre à bagages est avantageusement prévu entre la paroi latérale et le châssis du siège. Ce coffre à bagages comporte de préférence une porte latérale qui peut être une porte coulissante dans un plan sensiblement vertical à l'aide d'un rail de guidage sensiblement horizontal porté par la paroi latérale.

La présente invention concerne également un module comportant un siège ainsi qu'une paroi entourant au moins partiellement le siège, caractérisé en ce que le siège est un siège tel que décrit plus haut.

Elle concerne enfin un aéronef destiné au transport de passagers comportant au moins un siège convertible tel que décrit plus haut.

Des détails et avantages de la présente invention ressortiront mieux de la description qui suit faite en référence au dessin schématique annexé sur lequel :
La figure 1 représente un siège selon l'invention dans sa configuration pour recevoir un passager en position assise,
Les figures 2 et 3 montrent schématiquement le siège de la figure 1 lorsque celui-ci est dans des positions Intermédiaires entre sa position dite assise et sa position dite couchée,
La figure 4 montre schématiquement le siège de la figure 1 converti en lit,
Les figures 5a à 5e sont des vues de côté schématiques montrant le mouvement du dossier du siège des figures 1 à 4 lors du passage de la position de la figure 1 à celle de la figure 3,
Les figures 6a à 6d, 7a à 7d, 8a à 8d, 9a à 9d, 10a à 10d et 11 a à 11d montrent schématiquement six formes de réalisation distinctes d'un siège convertibles selon l'invention respectivement dans une position assise, dans une première position intermédiaire, dans une seconde position intermédiaire et dans la position couchée, et
Les figures 12a à 12c montrent schématiquement en vue de côté une forme de réalisation préférentielle d'un fauteuil destiné à un siège selon l'invention dans une première position assise, dans une seconde position assise avec le dossier incliné vers l'arrière et dans une position couchée.

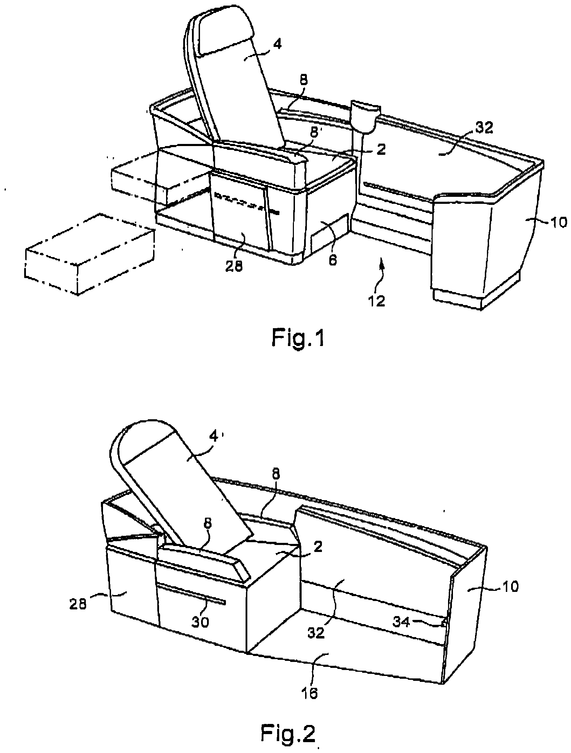

La figure 1 montre une première forme de réalisation d'un siège selon l'invention. Ce siège comporte une assise 2, un dossier 4 et un repose-pieds 6. De chaque côté de l'assise 2 se trouve également à chaque fois un accoudoir 8.

Ce siège est destiné à recevoir un passager d'aéronef et à être fixé sur le plancher d'une cabine d'aéronef. Ce siège est plus particulièrement destiné à un compartiment de première classe d'un aéronef ou bien éventuellement à un compartiment de classe affaires. Pour alors bien délimiter l'espace conféré au passager voyageant sur ce siège, une paroi 10 vient entourer cet espace. Le siège se trouve bien entendu à l'intérieur de cet espace et une ouverture 12 réalisée dans la paroi 10 permet l'accès à l'intérieur de cet espace et au siège. Cette paroi 10 a par exemple une hauteur d'environ 80 cm qui correspond sensiblement à la hauteur des accoudoirs 8. Ainsi, une personne assise sur le siège peut discuter avec une personne voisine et être relativement bien isolée des autres voyageurs lorsque le siège est converti en lit. Toutefois une hauteur différente peut bien entendu être choisie.

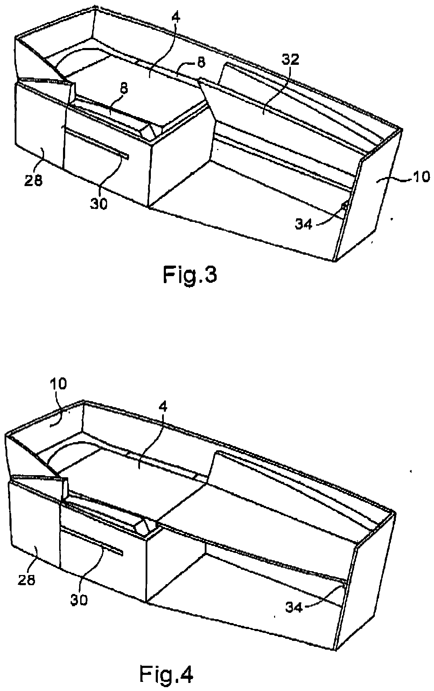

La figure 1 montre le siège dans une position dite assise dans laquelle il est destiné à recevoir un passager voyageant en position assise. Les figures 2 et 3 montrent des positions intermédiaires du siège de la figure 1 avant d'arriver dans la position dite couchée représentée sur la figure 4. Dans cette dernière position, le siège présente une surface de couchage sensiblement plane destinée raz recevoir un passager en position couchée.

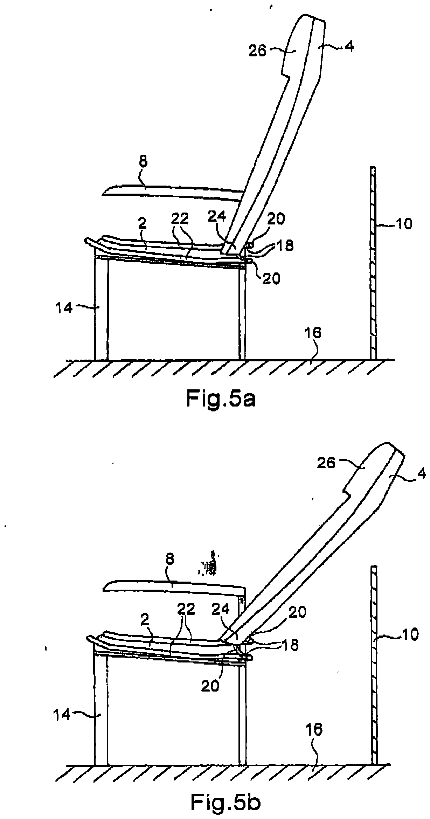

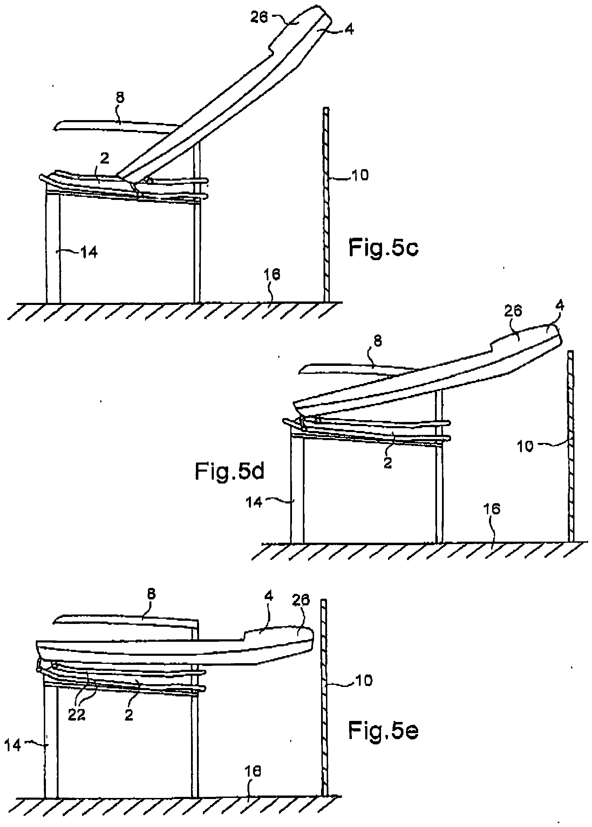

Les figures 5a à 5e illustrent le passage du dossier 4 de sa position relevée sensiblement verticale correspondant à la position assise du siège (figure 1) vers sa position allongée sensiblement horizontale correspondant à la position couchée du siège (figures 3 et 4). Ces figures 5 ne représentent que le fauteuil recevant le passager en position assise et non pas tous les composants du siège lui permettant également de se convertir en lit.

Les figures 5a à 5e permettent de mieux apprécier la structure du siège proprement dit. Celui-ci comporte un châssis 14 présentant quatre pattes pour sa fixation au sol. Cette fixation est réalisée par exemple de manière classique dans le domaine de l'aéronautique. Dans les cabines d'aéronef, il est prévu habituellement d'intégrer dans le sol 16 des rails longitudinaux (non représentés) répartis sur toute la largeur de la cabine et s'étendant sur sensiblement toute la longueur de celle-ci. Ces rails présentent des points d'ancrage régulièrement espacés, généralement avec un pas de 2,54 cm, soit un pouce. Chaque patte du châssis 14 vient alors se fixer de manière connue sur un point d'ancrage d'un tel rail.

Dans la suite de la description, on considère que l'espace est orienté comme le perçoit un passager assis (ou couché) sur le siège. Le sol 16 de la cabine se trouve donc en bas et est horizontal tandis que le siège se trouve au-dessus du sol. Le dossier 4, dans la position assise du siège, se trouve à l'arrière du siège. Les accoudoirs 8 sont disposés longitudinalement et se trouvent à droite et à gauche de l'assise 2.

Le châssis 14 présente un cadre reliant les pattes à distance du sol. L'assise 2 du siège est fixée solidairement à ce cadre. Les pattes arrière du châssis 14 se prolongent vers le haut au-dessus du cadre pour servir de support aux accoudoirs 8.

Le dossier 4 présente quant à lui des goujons 18 montés à l'extrémité de pattes 20. Les goujons 18 sont guidés dans des rainures 22 réalisées sur le châssis 14, sur les bords longitudinaux du cadre. Le dossier 4, dans la position assise du siège, présente une base 24 se trouvant en bas au niveau de l'assise 2 et une extrémité libre située à l'opposé de la base 24 et portant un appui-tête 26. Les pattes 20 sont chacune rattachées d'une part à la base 24 du dossier 4 et portent d'autre part à leur extrémité libre un goujon 18. Chaque goujon 18 s'étend sensiblement horizontalement transversalement par rapport au siège. Deux pattes 20 se trouvent de chaque côté du dossier 4 et forment sensiblement un V dont les extrémités libres portent chacune un goujon 18. Les rainures 22 sont réalisées sur une plaque sensiblement verticale, une plaque étant disposée à gauche de l'assise 2 et une autre à sa droite. Des moyens de serrage et/ou de verrouillage sont prévus pour maintenir les goujons 18 dans une position déterminée dans la rainure 22 correspondante. Ces moyens de serrage et/ou verrouillage sont éventuellement commandés à distance, par exemple par un levier disposé à l'extrémité avant d'un accoudoir 8.

La figure 5a montre le dossier 4 dans sa position relevée, sensiblement verticale correspondant à la position assise du siège. Les goujons 18 se trouvent alors en butée à l'arrière des rainures 22 correspondantes.

La figure 5b montre le dossier 4 lorsque celui-ci commence à s'incliner pour se rapprocher de la position horizontale. Dans ce premier mouvement, le dossier pivote autour de l'axe défini par les deux goujons 18 supérieurs. Ces derniers restent en butée au fond de la rainure 22 et les goujons 18 inférieurs se déplacent vers l'avant dans les rainures 22 inférieures.

Après ce premier mouvement pivotant, le dossier 4 avance vers l'avant du siège dans un mouvement essentiellement de translation (figure 5c). La base 24 du dossier 4 se rapproche alors de l'avant de l'assise 2.

Lorsque la base 24 du dossier 4 arrive à proximité de l'avant de l'assise 2 (figure 5d), le mouvement de translation vers l'avant du dossier est combiné à une rotation de manière à amener le dossier 4 sensiblement à l'horizontale comme représenté sur la figure 5e.

On remarque sur ces figures 5 que le mouvement du dossier 4 se fait sans être gêné par la paroi 10. Le châssis 14 et la paroi 10 sont disposés l'un par rapport à l'autre de telle sorte que dans la position allongée sensiblement horizontale du dossier 4 d'une part l'appui-tête 26 se trouve à proximité -au plus à quelques centimètres- de la paroi 10 et d'autre part la base 24 du dossier se trouve sensiblement au-dessus du bord transversal avant de l'assise 2.

Étant donné que la hauteur du dossier 4 est supérieure à la longueur de l'assise 2, lorsque les conditions du paragraphe précédent sont remplies, il reste alors un espace entre le châssis 14 qui se trouve sous l'assise 2 et la paroi 10. Cet espace peut avantageusement être mis à profit pour le rangement de bagages. On remarque ainsi sur les figures 1 à 4 la présence d'une porte 28 coulissante sur la paroi 10, disposée au niveau du sol 16 de la cabine et à l'arrière du siège, pour permettre l'accès et la fermeture de cet espace de rangement. Un rail de guidage 30 horizontal est par exemple prévu dans la paroi 10 pour permettre le coulissement de cette porte 28.

La présence d'un tel espace de rangement derrière le siège est très avantageuse. En effet, le volume de rangement rendu ainsi disponible est supérieur au volume habituellement prévu par passager dans une cabine d'aéronef. De plus, cet aménagement d'un coffre à bagages derrière le siège et sur le sol 16 n'entraîne quasiment aucun poids supplémentaire comme c'est le cas lorsque des coffres à bagages sont aménagés en hauteur dans une cabine d'aéronef.

Le passage à l'horizontale du dossier 4 ne permet pas de recevoir un passager en position couchée. Des moyens complémentaires sont alors prévus pour coopérer avec le dossier 4 en position horizontale afin de créer une surface de couchage capable d'accueillir confortablement un homme en position allongée. Les figures 3 et 4 montrent ces moyens complémentaires et illustrent leur mise en ouvre.

Un supplément de couchette 32 est prévu à l'intérieur de la paroi 10. Lorsqu'un passager voyage assis sur le siège, ce supplément de couchette 32 est rangé à la verticale le long de la paroi 10, à l'intérieur de celle-ci, devant le châssis 14. Ce supplément de couchette 32 présente une surface plane complémentaire de la surface du dossier 4 pour former une couchette complète capable d'accueillir un passager.

Ce supplément de couchette 32 pourrait être simplement un élément indépendant du reste du siège et de la paroi 10 qui serait maintenu par exemple à l'aide de sangles lorsqu'il se trouve rangé à la verticale le long de la paroi 10 et que l'on viendrait détacher pour le mettre en position horizontale afin de coopérer avec le dossier à l'horizontale pour former une couchette.

Toutefois, il est préférable de prévoir des moyens de guidage facilitant le passage du supplément de couchette 32 de sa position rangée verticale à sa position "de service" horizontale. On peut ainsi prévoir par exemple un axe sensiblement horizontal au bas du supplément de couchette 32 lorsque celui-ci est en position rangée verticale le long de la paroi. Cet axe est alors en prise dans une rainure de guidage sensiblement verticale d'une part du côté du siège, par exemple la rainure peut être réalisée sur une patte avant du châssis 14, et d'autre part du côté de la paroi 10 opposé au siège. Lorsqu'alors l'axe du supplément de couchette 32 arrive en butée en position haute, ou bien même au cours du déplacement de cet axe dans les rainures correspondantes, le supplément de couchette 32 est pivoté (cf. figure 3) pour venir prendre une position horizontale (cf. figure 4). Ce supplément de couchette 32 est maintenu dans cette position horizontale en reposant sur le bord transversal avant de l'assise 2 ainsi que sur un rebord 34 ménagé sur la face intérieure de la paroi 10 à l'opposé du siège.

De façon classique, le siège selon l'invention peut également comporter un repose-pieds 6 comme dans la forme de réalisation représentée sur la figure 1. Ce repose-pieds 6 est par exemple inclinable pour soutenir les jambes d'un passager voyageant en position assise et augmenter son confort. Un tel repose-pieds n'est pas décrit plus en détails ici car il est d'une part connu de l'homme du métier et d'autre part il ne participe pas dans cette forme de réalisation décrite à la transformation du fauteuil représenté en couchette.

On remarque sur les figures 3 et 4 que les accoudoirs 8 sont dans une position abaissée par rapport à la position de la figure 1. De cette manière le passager voyageant couché n'est pas gêné au niveau de ces accoudoirs 8 qui peuvent également être ainsi utilisés pour augmenter la surface de couchage.

Le siège convertible ainsi réalisé peut présenter une masse sensiblement inférieure à la masse des sièges convertibles que l'on trouve dans les aéronefs actuels. Ceci est notamment obtenu grâce au fait que le châssis 14 est un châssis fixe qui ne se déplace pas. Ce siège est ainsi d'une conception tout à fait innovante. En effet, dans l'état de l'art antérieur un fauteuil est transformé en couchette en mettant l'un à côté de l'autre, sensiblement dans un même plan, le dossier du fauteuil, son assise et son repose-pieds. Pour pouvoir alors se convertir en lit, tout en restant dans un espace délimité assez restreint donné, Il est alors préférable dans l'état de la technique antérieur à l'invention de déplacer l'assise du fauteuil. La solution proposée décrite ci-dessus ne nécessite aucun mouvement de l'assise. Par rapport aux sièges convertibles de l'art antérieur, elle fait intervenir un élément supplémentaire, le supplément de couchette 32 et bien que présentant cet élément supplémentaire, la masse totale peut rester bien inférieure à la masse d'un siège d'aéronef convertible classique.

Outre l'avantage très important au niveau de la masse du siège, la solution proposée ci-dessus présente un autre avantage important au niveau du rangement des bagages voyageant en cabine. Cette solution permet de supprimer les coffres à bagages que l'on trouve habituellement en hauteur dans les cabines d'aéronef, ce qui donne un avantage supplémentaire en terme de masse. Un autre avantage est de permettre d'avoir une sensation d'espace bien plus importante dans la cabine de l'aéronef. En outre, les bagages sont plus faciles à ranger puisqu'il devient inutile de les porter pour les monter dans un coffre : il suffit de les faire glisser sur le sol, ce qui est bien plus ergonomique. Enfin les bagages étant rangés au niveau du sol, Ils ne risquent pas de tomber lors de l'ouverture du coffre à bagages.

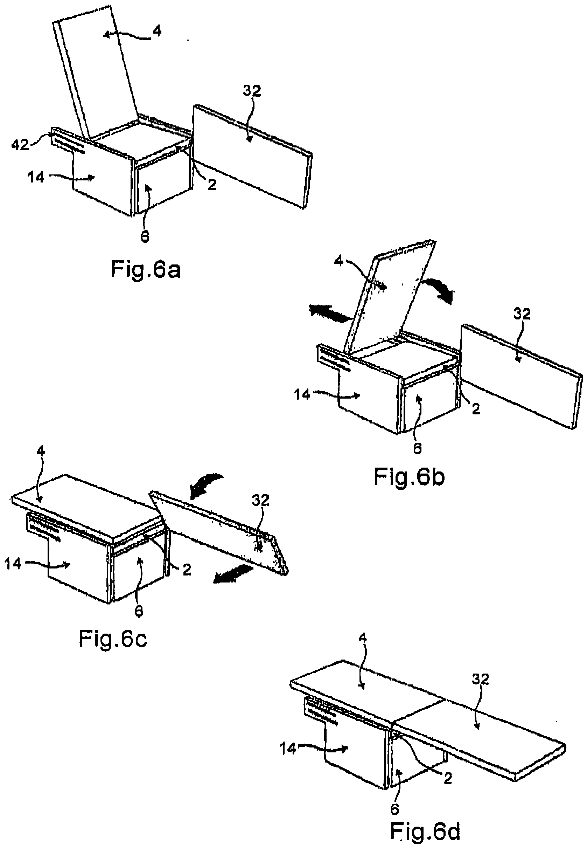

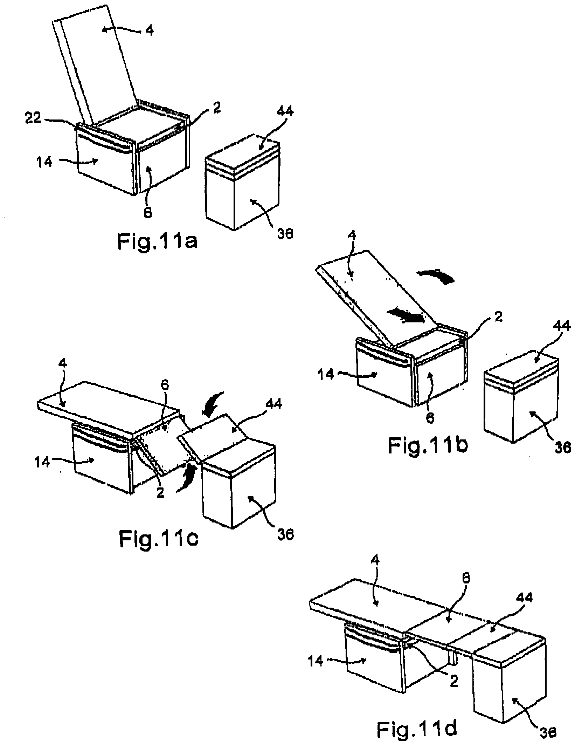

Les figures 6 à 11 montrent des variantes de réalisation d'un siège d'aéronef convertible selon l'invention et qui présentent également de nombreux avantages par rapport aux sièges convertibles de l'art antérieur.

Les sièges et autres éléments représentés sur les figures 6 à 11 peuvent également être entourés par une paroi 10 comme celle montrée sur les figures 1 à 5. Cette paroi est de préférence prévue pour toutes ces formes de réalisation afin de délimiter l'espace conféré à un passager. Toutefois, pour éviter que cette paroi ne cache des parties du siège, elle n'est pas représentée sur ces figures pour mieux montrer la transformation du siège en couchette.

Dans la forme de réalisation de la figure 6, le dossier 4 coopère également avec un supplément de couchette 32, qui peut être identique à celui des figures précédentes et qui porte donc la même référence, pour former une couchette. La différence ici est la sens de pivotement du dossier 4 pour passer de sa position sensiblement verticale à sa position horizontale. Alors que dans la première forme de réalisation précédemment décrite le dossier 4 était pivoté de telle sorte que sa face avant dans la position assise devienne la face supérieure en position couchée, dans cette seconde forme de réalisation, c'est la face arrière du dossier 4 en position assise qui devient la face supérieure en position couchée.

Pour réaliser ce nouveau mouvement de pivotement et de translation symbolisé par des flèches noires sur la figure 6b, des rainures 42 sont prévues. De même que les rainures 22, elles sont réalisées latéralement sur le châssis 14. Toutefois, au lieu de se trouver sensiblement à la hauteur de l'assise 2, elles se trouvent en arrière de celle-ci. Ainsi les rainures 42 permettent de guider en translation la base du dossier 4 vers l'arrière en même temps que le dossier 4 pivote pour se rabattre sur l'assise 2.

Une fois le dossier 4 rabattu, on retrouve le même supplément de couchette 32 que dans la première forme de réalisation qui se translate vers le haut et pivote -flèches noires sur la figure 6c- pour venir former une surface de couchage sensiblement plane. Le supplément de couchette 32 repose ici aussi par exemple sur un rebord telle rebord 34 des figures précédentes mais qui n'a pas été représenté ici.

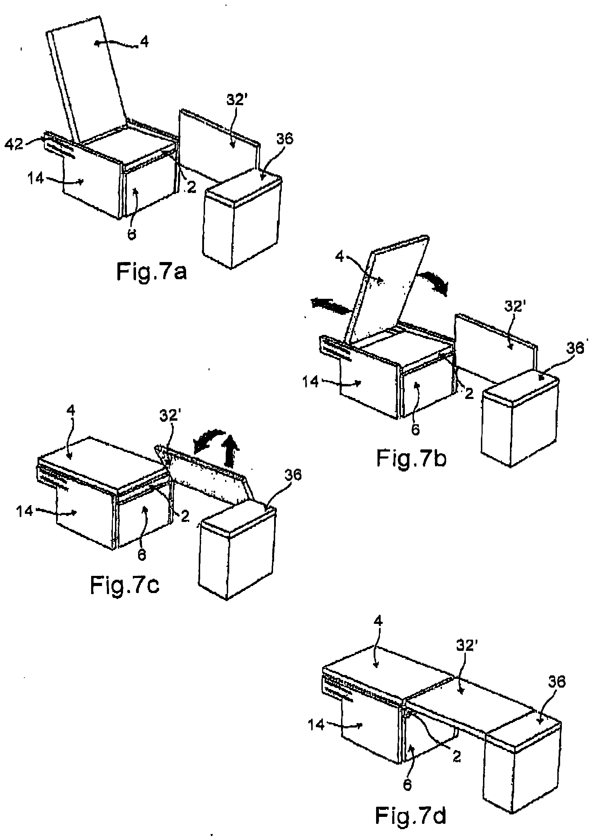

Dans la variante de réalisation de la figure 7, le dossier 4 reprend le même mouvement que dans la forme de réalisation de la figure 6 et est guidé par des rainures 42 pour passer de la position relevée sensiblement verticale à la position sensiblement horizontale.

Dans cette forme de réalisation, le passager dispose face à lui d'un équipement 36 qui peut avoir plusieurs fonctions. Il peut simplement servir de siège dans le cas où ce passager souhaite recevoir un autre passager et discuter avec lui. Cet équipement 36 peut également servir de rangement par exemple pour une couette et un oreiller qui sont utilisés lorsque le siège forme une couchette. Il peut aussi servir à loger un écran de télévision ou d'ordinateur. Toutes ces fonctions sont données à titre d'exemples non limitatifs.

Cet équipement 36 présente une partie supérieure qui se trouve sensiblement à la même hauteur que le dossier 4 lorsque celui-ci est en position horizontale. Pour alors former une couchette quand le dossier 4 est rabattu horizontalement, il est prévu d'utiliser un supplément de couchette 32', similaire au supplément de couchette 32 des figures précédentes. Toutefois, compte tenu ici de la présence de l'équipement 36 et de sa partie supérieure, le supplément de couchette 32' est de taille réduite par rapport au supplément de couchette 32 décrit précédemment. Ce supplément de couchette 32' de taille réduite se range également verticalement entre le fauteuil et l'équipement 36 et passe de sa position rangée verticale à sa position "active" horizontale par translation et pivotement, comme illustré par les deux flèches noires de la figure 7b. Ici aussi un axe peut être prévu pour le pivotement. On peut également prévoir simplement deux rainures, une du côté du châssis 14 du siège et l'autre du côté de l'équipement 36 pour le rangement du supplément de couchette 32'. En position horizontale, le supplément de couchette 32' vient ainsi en appui sur l'assise 2 et l'équipement et forme avec le dossier 4 rabattu et la partie supérieure de l'équipement 36 une couchette sensiblement plane.

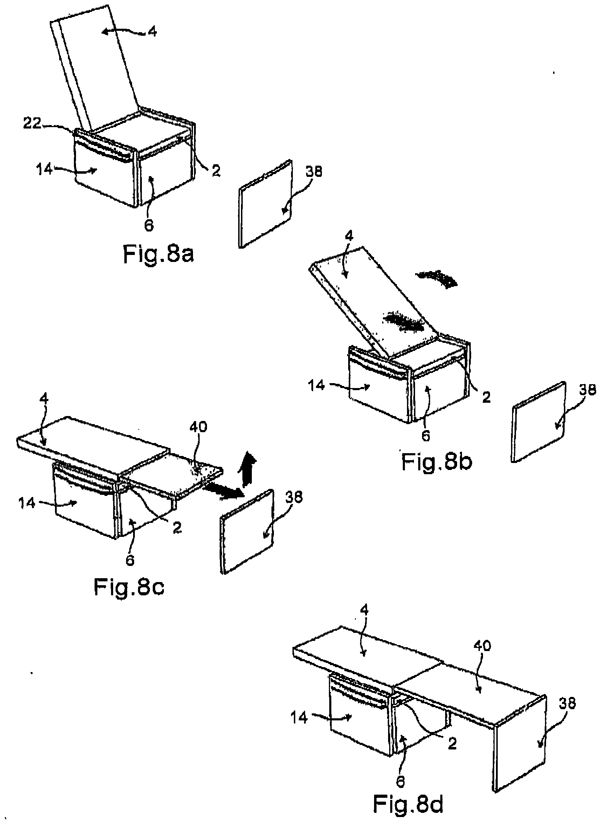

Dans la forme de réalisation de la figure 8, le dossier 4 passe de sa position relevée sensiblement verticale à sa position horizontale de la même manière que pour la forme de réalisation des figures 1 à 5.

Dans cette quatrième forme de réalisation d'un siège selon l'invention, on retrouve également un supplément de couchette 40. De manière originale, ce supplément de couchette 40 est rangé dans le dossier 4. Il présente sensiblement la même longueur que le dossier 4 et une largeur légèrement moindre.

Le dossier 4 peut être par exemple creux et présenter donc une forme tubulaire de section rectangulaire, éventuellement fermée au niveau de l'extrémité opposée à la base du dossier 4. Le supplément de couchette 40 est alors logé dans le creux du dossier.

Le dossier 4 peut également présenter une section en U. La base du U forme la face avant du dossier 4 lorsque celui-ci est en position relevée, c'est-à-dire la face contre laquelle s'adosse le passager quand il s'assied sur le siège. Les deux branches du U forment alors une glissière dans laquelle vient coulisser le supplément de couchette 40.

Une fois le supplément de couchette 40 sorti hors du dossier 4, il convient de le mettre au même niveau que le dossier 4 par une translation de quelques millimètres, ou centimètres, vers le haut. À cet effet, on peut prévoir un mécanisme similaire par exemple à celui mis en oeuvre pour rallonger une table. Des rallonges sont alors rangées sous le plateau de la table et on les fait coulisser pour les sortir et en fin de course la rallonge se positionne dans le même plan que le plateau de table. Ici en outre, compte tenu du porte à faux important, il est prévu également de soutenir le bord libre du supplément de couchette 40. Un support 38 est ainsi placé face au fauteuil. Il se présente sous la forme d'une paroi verticale faisant face au fauteuil. Des ergots de maintien (non représentés) sont par exemple prévus sur la face du support 38 se trouvant du côté du fauteuil pour recevoir et maintenir l'extrémité libre du supplément de couchette 40.

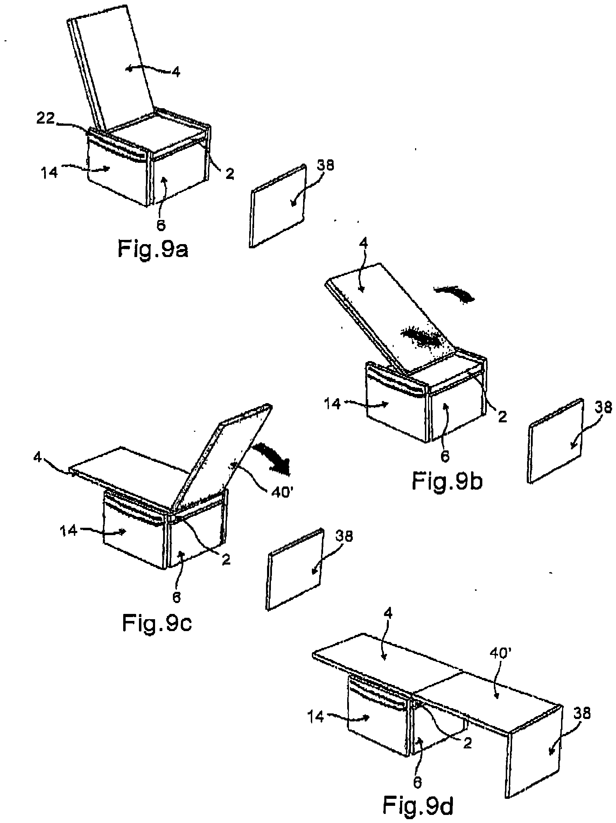

La cinquième forme de réalisation représentée sur la figure 9 est une variante de réalisation de la quatrième forme de réalisation. On retrouve le même mouvement du dossier 4 pour passer de la position relevée sensiblement verticale à la position sensiblement horizontale et un supplément de couchette 40' est intégré dans le dossier 4.

Ici le supplément de couchette 40' est monté pivotant par rapport au dossier 4. Il suffit ainsi de prévoir une charnière à la base du dossier 4 entre ce dernier et le supplément de couchette 40' pour amener ce dernier en position horizontale. Pour convertir le siège en lit, le dossier 4 est donc amené dans sa position sensiblement horizontale comme montré sur les figures 9a et 9b puis le supplément de couchette 40' est pivoté pour doubler la surface de couchage procurée par le dossier 4 mis à l'horizontale. Ici aussi, compte tenu du porte à faux important, le supplément de couchette 40' est maintenu à l'aide d'un support 38 muni avantageusement d'ergots de maintien.

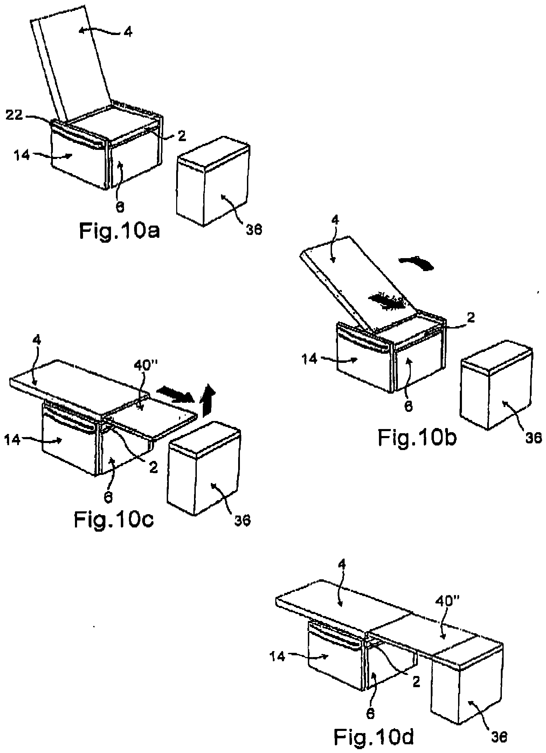

Dans la forme de réalisation de la figure 10, le dossier 4 passe de sa position relevée sensiblement verticale à sa position sensiblement horizontale de la même manière que pour la première forme de réalisation montrée dans le détail sur les figures 1 à 5. De même que pour les formes de réalisation de la figure 7, on retrouve ici un équipement 36 face au fauteuil.

Cette forme de réalisation est une variante de la forme de réalisation de la figure 8. On retrouve en effet ici un supplément de couchette 40" intégré au dossier 4 et coulissant par rapport à ce dernier. Grâce à la présence de l'équipement 36, le supplément de couchette 40" est de taille réduite par rapport au supplément de couchette 40 de la figure 8. Le passage de la position assise du siège à sa position couchée se fait comme pour la forme de réalisation de la figure 8. En fin de transformation, la couchette est alors formée ici du dossier 4, du supplément de couchette 40" et de la partie supérieure de l'équipement 36 alors que pour la forme de réalisation de la figure 8 la couchette ne comporte que deux parties : le dossier 4 et le supplément de couchette 40.

La septième forme de réalisation d'un siège selon l'invention proposée ici se décline par exemple à partir de la forme da réalisation précédente. On retrouve en effet un dossier 4 similaire guidé par des rainures 22 pour le passage dans sa position sensiblement horizontale et la présence d'un équipement 36 face au fauteuil.

La surface de couchage comporte le dossier 4 amené en position horizontale et la partie supérieure de l'équipement 36. Ceci ne suffit pas pour recevoir un passager en position couchée et il convient de combler l'espace entre le dossier 4 à l'horizontale et l'équipement 36. L'invention propose dans cette forme de réalisation d'utiliser le repose-pied 6 comme cela se fait classiquement dans les sièges convertibles de l'art antérieur en amenant cet élément du fauteuil sensiblement à l'horizontale, dans le prolongement du dossier 4. Elle propose également de dédoubler la partie supérieure de l'équipement en une partie fixe et un rabat 44 articulé sur la partie fixe par au moins une charnière, disposée sur un bord transversal de la partie fixe, du côté du fauteuil.

La couchette ainsi réalisée est constituée de quatre éléments : le dossier 4, le repose-pieds 6, le rabat 44 et la partie supérieure fixe de l'équipement 36.

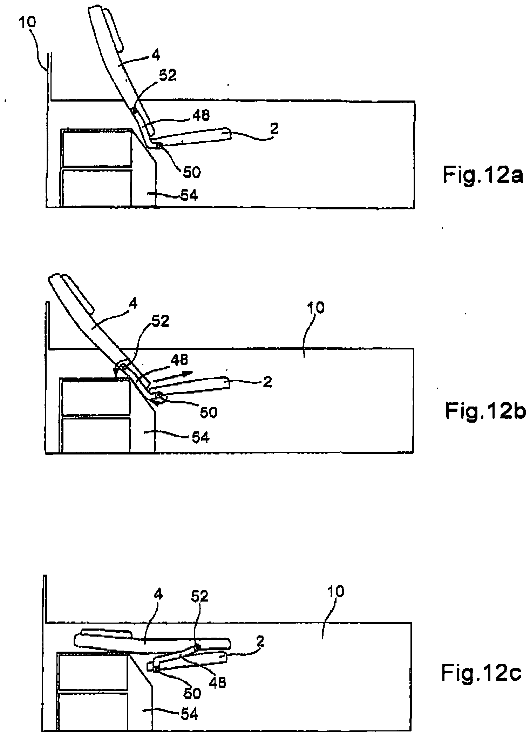

Les figures 12a à 12c montrent, comme les figures 5a à 5e, un fauteuil d'un siège convertible selon l'invention. Par souci de simplicité et de clarté, pour le fauteuil seuls l'assise, le dossier et les moyens de guidage de ce dernier ont été représentés sur ces figures.

Dans cette forme de réalisation, l'assise 2 du fauteuil reste fixe. Le dossier 4 est relié à l'assise 2 par l'intermédiaire de deux leviers 48. Sur les figures 12a à 12c, seul le levier droit est visible, l'autre levier 48 étant caché. Ce levier 48 gauche est similaire au levier visible au dessin. Comme on peut le voir, chaque levier présente une forme générale en L.

Chaque levier 48 est monté pivotant d'une part par rapport à l'assise 2 et d'autre part par rapport au dossier 4. Chaque levier 48 est monté pivotant autour d'un axe 50, transversal et horizontal disposé latéralement à l'arrière de l'assise 2. En pivotant autour de cet axe 50, chaque levier 48 reste dans un plan sensiblement vertical. L'axe 50 traverse le levier 48 au niveau de son extrémité libre correspondant à la petite branche (horizontale) du L.

Le dossier 4 est monté entre les deux leviers 48. L'articulation entre chaque levier 48 et le dossier 4 se fait par un axe 52 transversal et horizontal. Les deux leviers 48 sont par exemple reliés par une platine (non représentée) qui s'étend à l'arrière du dossier 4 en position assise. Cette platine s'étend par exemple sur tout ou partie de la hauteur de la grande branche (verticale) des leviers 48. Elle permet, en rigidifiant l'ensemble mobile comprenant le dossier, de faciliter le mouvement de cet ensemble par rapport à l'assise 2.

Dans la position représentée sur la figure 12a, le fauteuil se trouve dans une position assise normale. Sur la figure 12b, le dossier 4 est incliné vers l'arrière par rapport à la position de la figure 12a. Pour passer de la position représentée sur cette dernière figure à la position de la figure 12b, les deux leviers 48 pivotent chacun autour de leur axe 50. Les deux positions des leviers 48 représentées sur ces deux figures 12a et 12b sont par exemple indexées.

Dans les positions représentées sur les figures 12a et 12b, les leviers 48 sont verrouillés sur les axes 50 et le dossier 4 est verrouillé par rapport aux axes 52. Les moyens de verrouillage mis en oeuvre ici ne sont pas représentés au dessin. De tels moyens de verrouillage sont connus de l'homme du métier.

Pour passer de la position représentée sur la figure 12a ou sur celle de la figure 12b à la position représentée sur la figure 12c, il convient de faire pivoter les leviers 48 dans le sens de la flèche représentée à côté de l'axe 50 et de faire basculer le dossier 4 dans le sens de la flèche représentée à proximité de l'axe 52. Dans ce mouvement, le bas du dossier 4, c'est-à-dire la partie du dossier se trouvant en position assise à proximité de l'assise 2, se déplace sensiblement le long de la face supérieure de l'assise 2. Ce mouvement est représenté par une troisième flèche au-dessus de l'assise 2.

On a représenté sur les figures 12a à 12c d'une part une paroi 10 entourant le siège correspondant à l'assise 2 et au dossier 4 représentés et telle celle visible sur les figures 1 à 5 et d'autre part un coffre à bagages 54. Ce coffre à bagages 54 prend place à l'arrière du fauteuil représenté, entre le châssis (non représenté) de celui-ci et la paroi 10. Un tel coffre à bagages 54 peut alors recevoir deux valises du format de celles habituellement acceptées en cabine dans un avion.

Comme illustré sur les figures 12b et 12c, ce coffre à bagages 54 peut également servir de support pour le dossier 4 du fauteuil représenté. Dans la forme de réalisation représentée, le coffre à bagages 54 présente un pan coupé dans sa partie supérieure du côté du fauteuil. L'inclinaison de ce pan correspond à l'inclinaison du dossier dans sa position assise Inclinée vers l'arrière (fig. 12b). Le bas du dossier 4 peut ainsi venir en appui contre ce pan incliné qui sert également de butée pour les leviers 48. Sur la figure 12c, le dossier 4 est en position sensiblement horizontale et il vient reposer sur la partie supérieure du coffre à bagages 54.

Dans cette forme de réalisation préférée, la distance séparant sur un même côté les axes 50 et 52 est légèrement supérieure à la moitié de la longueur de l'assise 2. De cette manière, il est possible de déplacer le bas du dossier, lors du passage d'une position assise à la position couchée d'une distance correspondant sensiblement à la longueur de l'assise 2. Cette distance séparant les axes est dépendante bien entendu de la position de ces axes. Elle dépend également éventuellement de l'épaisseur de l'assise et du dossier. Dans une variante de réalisation, on pourrait envisager de disposer les axes 50 non pas au niveau de l'assise 2 mais au niveau du châssis (non représenté sur les figures 12a à 12c) du fauteuil, ou sur une autre partie fixe du fauteuil.

Le dossier 4, dans la position horizontale représentée sur la figure 12c, forme ainsi une partie de la surface de couchage du siège selon l'invention en position couchée. Pour compléter la surface de couchage procurée par le dossier 4 de manière à pouvoir accueillir un passager en position couchée, des moyens complémentaires tels ceux représentés sur les figures 1 à 4 ou 6 à 11 peuvent être envisagés.

Toutes ces formes de réalisation permettent d'avoir un siège convertible en lit de manière simple, Elles peuvent être réalisées en faisant des économies de poids très sensibles par rapport aux sièges d'aéronef connus qui peuvent être convertis en lits. Ces sièges sont prévus pour être entourés d'une paroi verticale séparant le passager voyageant sur ce siège du reste de l'espace de la cabine créant ainsi un espace individuel pour le passager afin d'améliorer son confort.

Par rapport aux sièges convertibles de l'art antérieur, la surface de couchage n'est pas constituée du dossier, de l'assise et du repose-pieds mais elle comporte au plus deux de ces trois éléments. On remarque également que le châssis du siège, c'est-à-dire la structure, généralement métallique, qui est destinée à maintenir le siège d'aéronef dans sa position en résistant aux sollicitations mécaniques auxquelles peut être soumis le siège, est fixe et ne se déplace pas par rapport a la cabine dans laquelle il se trouve.

La présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

Ainsi par exemple d'autres formes de réalisation sont envisageables. On peut ainsi par exemple envisager d'avoir un supplément de couchette intégré à l'assise du siège.

Les moyens de guidage du dossier peuvent être différents de ceux présentés pour déplacer le dossier. Dans une variante de réalisation, le dossier peut être monté sur un chariot mobile par rapport au châssis du siège,

## Revendications

1. Siège convertible destiné à recevoir un passager d'aéronef, comportant un châssis (14), une assise (2) fixe portée par le châssis (14) et un dossier (4), ce siège pouvant passer d'une position dite assise dans laquelle le dossier (4) forme un angle avec l'assise (2) supposée horizontale à une position dite couchée dans laquelle Il présente une surface sensiblement plane destinée à accueillir le passager en position couchée, ledit siège comportant en outre, d'une part, des moyens de guidage pour faire passer le dossier de sa position assise vers une position sensiblement horizontale et, d'autre part, au moins un supplément de couchette coopérant avec le dossier (4) pour former la surface sensiblement plane destinée à recevoir le passager en position couchée, dans sa position couchée le dossier (4) recouvrant la majeure partie de l'assise (2), et le supplément de couchette prenant une position sensiblement horizontale dans le prolongement du dossier (4), vers l'avant, lorsque le siège est en position couchée,
**caractérisé en ce que** les moyens de guidage (22, 42) permettent lors du passage du siège de la position assise à la position couchée de guider le dossier (4) selon un mouvement qui est la combinaison d'une translation longitudinale et d'une rotation autour d'un axe sensiblement transversal et horizontal.

2. Siège convertible selon la revendication 1, **caractérisé en ce que** le dossier (4) en position couchée recouvre l'assise (2), et **en ce qu'**un bord du dossier en position couchée choisi dans l'ensemble comprenant la base (24) du dossier et son extrémité libre est sensiblement superposé à un bord de l'assise (2).

3. Siège convertible selon l'une des revendications 1 ou 2, **caractérisé en ce que** les moyens de guidage comportent de part et d'autre du châssis (14) au moins un rail de guidage (22) de manière à guider la base (24) du dossier lors du passage de la position assise à la position couchée depuis la position correspondant à l'arrière de l'assise (2) en position assise à une position correspondant à l'avant de l'assise (2) en position assise.

4. Siège convertible selon l'une des revendications 1 ou 2. **caractérisé en ce que** les moyens de guidage comportent de part et d'autre du châssis (14) au moins un rail de guidage (42) de manière à guider la base (24) du dossier lors du passage de la position assise à la position couchée depuis la position correspondant à l'arrière de l'assise (2) à une position reculée de telle sorte que lorsque la base (24) du dossier se trouve dans cette position reculée l'extrémité libre du dossier (4) se trouve dans une position correspondant à l'avant de l'assise (2).

5. Siège convertible selon l'une des revendications 1 ou 2, **caractérisé en ce que** le dossier (4) est relié à une partie fixe (2) du siège par l'intermédiaire de deux leviers (48) se trouvant de part et d'autre de l'assise (2), **en ce que** chaque levier (48) est monté pivotant autour d'un axe (50) sensiblement horizontal et transversal par rapport à ladite partie fixe (2), et **en ce que** le dossier (4) est monté pivotant autour d'un axe (52) sensiblement horizontal et transversal entre les deux leviers (48).

6. Siège convertible selon la revendication 5, **caractérisé en ce que** l'assise (2) est fixée sur le châssis (14), et **en ce que** les leviers (48) sont montés sur les côtés latéraux de l'assise (2).

7. Siège convertible selon l'une des revendications 5 ou 6, **caractérisé en ce que** les leviers (48) sont reliés par une platine.

8. Siège convertible selon l'une des revendications 5 à 7, **caractérisé en ce que** pour chaque levier (48) la distance entre l'axe (50) de pivotement du levier (48) par rapport à ladite partie fixe (2) et l'axe (52) de pivotement du dossier (4) est comprise entre la moitié et les trois quarts de la longueur, dans le sens longitudinal, de l'assise (2).

9. Siège convertible selon l'une des revendications 1 à 8, **caractérisé en ce que** des moyens de serrage et/ou verrouillage maintiennent le dossier (4) dans sa position relevée lorsque le siège est dans sa position dite assise.

10. Siège convertible selon l'une des revendications 1 à 8, **caractérisé en ce que** le supplément de couchette coopérant avec le dossier (4) pour former une surface plane comporte une tablette (32, 32') mobile entre la position sensiblement horizontale dans le prolongement vers l'avant du dossier (4) et une position sensiblement verticale latérale dans la position assise.

11. Siège convertible selon la revendication 10, **caractérisé en ce que** la surface de couchage sensiblement plane est constituée du dossier (4) en position sensiblement horizontale et de ladite tablette mobile (32, 32'),

12. Siège convertible selon la revendication 10, **caractérisé en ce qu'**en position couchée, ladite tablette mobile (32') coopère avec le dossier (4) et un équipement (36) disposé en regard et à distance du châssis (14) et dont la hauteur correspond sensiblement à celle de l'assise (2) du siège.

13. Siège convertible selon l'une des revendications 1 à 9, **caractérisé en ce qu'**il comporte un repose-pieds (6) monté pivotant autour d'un axe transversal situé à proximité de son bord avant de manière à pouvoir pivoter d'environ 90° et se retrouver alors sensiblement dans le prolongement du dossier (4) en position couchée.

14. Siège convertible selon la revendication 13, **caractérisé en ce que** les moyens coopérant avec le dossier (4) pour former une surface plane comportent le repose-pieds (6) pivoté ainsi qu'un équipement (36) disposé en regard et à distance du châssis (14) et dont la hauteur correspond sensiblement à celle de l'assise (2) du siège.

15. Siège convertible selon la revendication 14, **caractérisé en ce que** l'équipement (36) comporte un rabat (44) mobile pouvant pivoter d'environ 180° autour d'un axe sensiblement transversal et horizontal de manière à former un supplément de couchette.

16. Siège convertible selon l'une des revendications 1 à 9, **caractérisé en ce que** le dossier (4) intègre un supplément de couchette (40, 40', 40").

17. Siège convertible selon la revendication 18, **caractérisé en ce que** le supplément de couchette (40, 40") Intégré au dossier (4) est monté coulissant par rapport à ce dernier.

18. Siège convertible selon la revendication 16, **caractérisé en ce que** le supplément de couchette (40') intégré au dossier (4) est monté pivotant par rapport à ce dernier.

19. Siège convertible selon l'une des revendications 1 à 18, **caractérisé en ce qu'**il comporte en outre une paroi (10) latérale entourant notamment l'arrière du siège.

20. Siège convertible selon la revendication 19, **caractérisé en ce qu'**un coffre à bagages est prévu entre la paroi (10) latérale et le châssis (14) du siège.

21. Siège convertible selon la revendication 20, **caractérisé en ce que** le coffre à bagages comporte une porte latérale (28).

22. Siège convertible selon la revendication 21, **caractérisé en ce que** la porte latérale est une porte coulissante (28) dans un plan sensiblement vertical à l'aide d'un rail de guidage (30) sensiblement horizontal porté par la paroi (10) latérale.

23. Module comportant un siège ainsi qu'une paroi (10) entourant au moins partiellement le siège, **caractérisé en ce que** le siège est un siège selon l'une des revendications 1 à 22.

24. Aéronef destiné au transport de passagers, **caractérisé en ce qu'**il comporte au moins un siège convertible selon l'une des revendications 1 à 22.

## Claims

1. A convertible seat intended to accommodate an aircraft passenger, comprising a frame (14), a fixed seat-rest (2) borne by the frame (14) and a back-rest (4), the seat being able to pass from a so-called seated position in which the back-rest (4) forms an angle with the seat-rest (2) which is assumed horizontal to a so-called lying-down position in which it has a substantially planar surface intended to accommodate the passenger in lying-down position, said seat further comprising guiding means to make the back-rest pass from its seated position to a substantially horizontal position, and at least one additional berth portion cooperating with the back-rest (4) to form the substantially planar surface intended to accommodate the passenger in lying-down position, the back-rest (4) in lying-down position covering the major portion of the seat-rest (2), and the additional berth portion taking a substantially horizontal position extending forwardly in line with the back-rest (4), when the seat is in lying-down position,
**characterized in that** the guiding means (22, 42) make it possible, on passage of the seat from the seated position to the lying-down position, to guide the back-rest (4) in a movement which is the combination of a longitudinal translation and a rotation about an axis that is substantially transverse and horizontal.

2. A convertible seat according to claim 1, **characterized in that** the back-rest (4) in lying-down position covers the seat-rest (2), and **in that** an edge of the back-rest in lying-down position selected from the group comprising the base (24) of the back-rest and its free end is substantially superposed with respect to one edge of the seat-rest (2).

3. A convertible seat according to one of claims 1 or 2, **characterized in that** the guiding means comprise on both sides of the frame (14) at least one guiding rail (22) so as to guide the base (24) of the back-rest, on passage from the seated position to the lying-down position, from the position corresponding to the rear of the seat-rest (2) in seated position to a position corresponding to the front of the seat-rest (2) in seated position.

4. A convertible seat according to one of claims 1 or 2, **characterized in that** the guiding means comprise on both sides of the frame (14) at least one guiding rail (42) so as to guide the base (24) of the back-rest on passage from the seated position to the lying-down position from the position corresponding to the rear of the seat-rest (2) to a drawn-back position such that when the base (24) of the back-rest is in this drawn-back position the free end of the back-rest (4) is in a position corresponding to the front of the seat-rest (2).

5. A convertible seat according to one of claims 1 or 2, **characterized in that** the back-rest (4) is linked to a fixed portion (2) of the seat by means of two levers (48) located respectively on each of the two sides of the seat-rest (2), **in that** each lever (48) is pivotally mounted about an axis (50) substantially horizontal and transverse in relation to said fixed portion (2), and **in that** the back-rest (4) is pivotally mounted about an axis (52) that is substantially horizontal and transverse between the two levers (48).

6. A convertible seat according to claim 5, **characterized in that** the seat-rest (2) is fixed to the frame (14), and **in that** the levers (48) are mounted on the lateral sides of the seat-rest (2).

7. A convertible seat according to one of claims 5 or 6, **characterized in that** the levers (48) are linked by a plate.

8. A convertible seat according to one of claims 5 to 7, **characterized in that** for each lever (48) the distance between the axis (50) of pivoting of the lever (48) in relation to said fixed portion (2) and the axis (52) of pivoting of the back-rest (4) is between half and three-quarters of the length of the seat-rest (2), in the longitudinal direction.

9. A convertible seat according to one of claims 1 to 8, **characterized in that** clamping and/or locking means hold the back-rest (4) in its raised position when the seat is in its so-called seated position.

10. A convertible seat according to one of claims 1 to 8, **characterized in that** the additional berth portion cooperating with the back-rest (4) to form a planar surface comprises a shelf (32, 32') moveable between the substantially horizontal position extending forwardly in line with the back-rest (4) and a substantially lateral vertical position in the seated position.

11. A convertible seat according to claim 10, **characterized in that** the substantially planar surface for lying down is made up of the back-rest (4) in substantially horizontal position and said movable shelf (32, 32').

12. A convertible seat according to claim 10, **characterized in that** in lying-down position, said movable shelf (32') cooperates with the back-rest (4) and a unit (36) arranged facing and at a distance from the frame (14) and of which the height corresponds substantially to that of the seat-rest (2) of the seat.

13. A convertible seat according to one of claims 1 to 9, **characterized in that** it comprises a foot-rest (6) pivotally mounted about a transverse axis located close to its front edge so as to be able to pivot approximately 90° and then be substantially in line with the back-rest (4) in lying-down position.

14. A convertible seat according to claim 13, **characterized in that** the means cooperating with the back-rest (4) to form a planar surface comprise the pivoted foot-rest (6) as well as a unit (36) arranged facing and at a distance from the frame (14) and of which the height corresponds substantially to that of the seat-rest (2) of the seat.

15. A convertible seat according to claim 14, **characterized in that** the unit (36) comprises a movable flap (44) capable of pivoting approximately 180° about an axis that is substantially transverse and horizontal so as to form an additional berth portion.

16. A convertible seat according to one of claims 1 to 9, **characterized in that** the back-rest (4) incorporates an additional berth portion (40, 40', 40").

17. A convertible seat according to claim 16, **characterized in that** the additional berth portion (40, 40") incorporated into the back-rest (4) is slidingly mounted in relation thereto.

18. A convertible seat according to claim 16, **characterized in that** the additional berth portion (40') incorporated into the back-rest (4) is pivotally mounted in relation thereto.

19. A convertible seat according to one of claims 1 to 18, **characterized in that** it further comprises a lateral wall (10) surrounding in particular the rear of the seat.

20. A convertible seat according to claim 19, **characterized in that** a luggage compartment is provided between the lateral wall (10) and the frame (14) of the seat.

21. A convertible seat according to claim 20, **characterized in that** the luggage compartment comprises a lateral door (28).

22. A convertible seat according to claim 21, **characterized in that** the lateral door is a door (28) sliding in a substantially vertical plane with the aid of a substantially horizontal guiding rail (30) borne by the lateral wall (10).

23. A module comprising a seat as well as a wall (10) surrounding the seat at least partially, **characterized in that** the seat is a seat according to one of claims 1 to 22.

24. An aircraft intended for the transport of passengers, **characterized in that** it comprises at least one convertible seat according to one of claims 1 to 22.

## Patentansprüche

1. Umwandelbarer Sitz zum Aufnehmen eines Luftfahrzeug-Passagiers, enthaltend einen Rahmen (14), eine von dem Rahmen (14) getragene, feste Sitzfläche (2) und eine Rückenlehne (4), wobei dieser Sitz aus einer sogenannten Sitzposition, in welcher die Rückenlehne (4) einen Winkel mit der als horizontal verlaufend angenommenen Sitzfläche (2) einschließt, in eine sogenannte Liegeposition gebracht werden kann, in welcher er eine im Wesentlichen ebene Fläche aufweist, die dazu bestimmt ist, den Passagier in Liegeposition aufzunehmen, wobei der Sitz ferner einerseits Führungsmittel aufweist, um die Rückenlehne aus ihrer Sitzposition in eine im Wesentlichen horizontal verlaufende Stellung zu bringen, sowie andererseits zumindest einen Liegeflächenzusatz, der mit der Rückenlehne (4) zusammenwirkt, um die im Wesentlichen ebene Fläche zum Aufnehmen des Passagiers in Liegeposition zu bilden, wobei die Rückenlehne (4) in ihrer Liegeposition den Großteil der Sitzfläche (2) überdeckt und der Liegeflächenzusatz in Verlängerung der Rückenlehne (4) nach vorne eine im Wesentlichen horizontal verlaufende Stellung einnimmt, wenn der Sitz in Liegeposition ist,
**dadurch gekennzeichnet, dass**
die Führungsmittel (22, 42) beim Übergang des Sitzes von der Sitzposition in die Liegeposition gestatten, die Rückenlehne (4) in einer Bewegung zu führen, welche die Kombination einer Längsverschiebung und einer Drehung um eine im Wesentlichen quer und horizontal verlaufenden Achse ist.

2. Umwandelbarer Sitz nach Anspruch 1,
**dadurch gekennzeichnet , dass** die Rückenlehne (4) in Liegeposition die Sitzfläche (2) überdeckt und dass ein Rand der Rückenlehne in Liegeposition, der aus der Einheit umfassend die Basis (24) der Rückenlehne und ihr freies Ende ausgewählt ist, im Wesentlichen einem Rand der Sitzfläche (2) überlagert ist.

3. Umwandelbarer Sitz nach einem der Ansprüche 1 oder 2,
**dadurch gekennzeichnet , dass** die Führungsmittel beiderseits des Rahmens (14) zumindest eine Führungsschiene (22) aufweisen, so dass beim Übergang aus der Sitzposition in die Liegeposition die Basis (24) der Rückenlehne ausgehend von der dem hinteren Bereich der Sitzfläche (2) in Sitzposition entsprechenden Stellung in eine dem vorderen Bereich der Sitzfläche (2) in Sitzposition entsprechende Stellung geführt wird.

4. Umwandelbarer Sitz nach einem der Ansprüche 1 oder 2,
**dadurch gekennzeichnet , dass** die Führungsmittel beiderseits des Rahmens (14) zumindest eine Führungsschiene (42) aufweisen, so dass beim Übergang aus der Sitzposition in die Liegeposition die Basis (24) der Rückenlehne ausgehend von der dem hinteren Bereich der Sitzfläche (2) entsprechenden Stellung in eine zurückgefahrene Stellung geführt wird, so dass dann, wenn die Basis (24) der Rückenlehne sich in dieser zurückgefahrenen Stellung befindet, das freie Ende der Rückenlehne (4) sich in einer dem vorderen Bereich der Sitzfläche (2) entsprechenden Stellung befindet.

5. Umwandelbarer Sitz nach einem der Ansprüche 1 oder 2,
**dadurch gekennzeichnet , dass** die Rückenlehne (4) mit einem festen Teil (2) des Sitzes über zwei Hebel (48) verbunden ist, die sich beiderseits der Sitzfläche (2) befinden, dass jeder Hebel (48) um eine im Wesentlichen horizontal und quer verlaufende Achse (50) bezüglich des festen Teils (2) verschwenkbar gelagert ist und dass die Rückenlehne (4) um eine im Wesentlichen horizontal und quer verlaufende Achse (52) zwischen den beiden Hebeln (48) verschwenkbar gelagert ist.

6. Umwandelbarer Sitz nach Anspruch 5,
**dadurch gekennzeichnet, dass** die Sitzfläche (2) am Rahmen (14) befestigt ist und dass die Hebel (48) an den Seitenflächen der Sitzfläche (2) montiert sind.

7. Umwandelbarer Sitz nach einem der Ansprüche 5 oder 6,
**dadurch gekennzeichnet, dass** die Hebel (48) über eine Verbindungsplatte verbunden sind.

8. Umwandelbarer Sitz nach einem der Ansprüche 5 bis 7,
**dadurch gekennzeichnet ,dass** bei jedem Hebel (48) der Abstand zwischen der Schwenkachse (50) des Hebels (48) bezüglich des festen Teils (2) und der Schwenkachse (52) der Rückenlehne (4) zwischen der Hälfte und Dreiviertel der Länge der Sitzfläche (2) in Längsrichtung beträgt.

9. Umwandelbarer Sitz nach einem der Ansprüche 1 bis 8,
**dadurch gekennzeichnet , dass** Klemm- und/oder Verriegelungsmittel die Rückenlehne (4) in ihrer angehobenen Stellung halten, wenn der Sitz in seiner Sitzposition ist.

10. Umwandelbarer Sitz nach einem der Ansprüche 1 bis 8,
**dadurch gekennzeichnet , dass** der Liegeflächenzusatz, der zum Bilden einer ebenen Fläche mit der Rückenlehne (4) zusammenwirkt, eine Abstellplatte (32, 32') aufweist, die zwischen der im Wesentlichen horizontal verlaufenden Stellung der Rückenlehne (4) in Verlängerung nach vorne und einer im Wesentlichen vertikalen Seitenstellung in Sitzposition beweglich ist.

11. Umwandelbarer Sitz nach Anspruch 10,
**dadurch gekennzeichnet , dass** die im Wesentlichen ebene Liegefläche aus der Rückenlehne (4) in im Wesentlichen horizontal verlaufender Stellung und der beweglichen Abstellplatte (32, 32') gebildet ist.

12. Umwandelbarer Sitz nach Anspruch 10,
**dadurch gekennzeichnet , dass** in Liegeposition die bewegliche Abstellplatte (32') mit der Rückenlehne (4) und einem Ausstattungsteil (36) zusammenwirkt, das dem Rahmen (14) entgegengesetzt und von diesem beabstandet angeordnet ist und dessen Höhe im Wesentlichen derjenigen der Sitzfläche (2) des Sitzes entspricht.

13. Umwandelbarer Sitz nach einem der Ansprüche 1 bis 9,
**dadurch gekennzeichnet , dass** er eine Fußstütze (6) aufweist, die um eine Querachse verschwenkbar gelagert ist, die in der Nähe ihrer Vorderkante liegt, so dass sie sich um etwa 90° verschwenken kann und sich dann im Wesentlichen in Verlängerung der Rückenlehne (4) in Liegeposition befindet.

14. Umwandelbarer Sitz nach Anspruch 13,
**dadurch gekennzeichnet, dass** die Mittel, die zum Bilden einer ebenen Fläche mit der Rückenlehne (4) zusammenwirken, die verschwenkte Fußstütze (6) sowie ein Ausstattungsteil (36) aufweisen, das dem Rahmen (14) entgegengesetzt und von diesem beabstandet angeordnet ist und dessen Höhe im Wesentlichen derjenigen der Sitzfläche (2) des Sitzes entspricht.

15. Umwandelbarer Sitz nach Anspruch 14,
**dadurch gekennzeichnet, dass** das Ausstattungsteil (36) eine bewegliche Umschlagklappe (44) aufweist, die sich um etwa 180° um eine im Wesentlichen quer und horizontal verlaufende Achse verschwenken kann, so dass sie einen Liegeflächenzusatz bildet.

16. Umwandelbarer Sitz nach einem der Ansprüche 1 bis 9,
**dadurch gekennzeichnet, dass** in der Rückenlehne (4) ein Liegeflächenzusatz (40, 40', 40") integriert ist.

17. Umwandelbarer Sitz nach Anspruch 16,
**dadurch gekennzeichnet, dass** der in der Rückenlehne (4) integrierte Liegeflächenzusatz (40, 40") gegenüber dieser gleitbeweglich gelagert ist.

18. Umwandelbarer Sitz nach Anspruch 16,
**dadurch gekennzeichnet , dass** der in der Rückenlehne (4) integrierte Liegeflächenzusatz (40') gegenüber dieser verschwenkbar gelagert ist.

19. Umwandelbarer Sitz nach einem der Ansprüche 1 bis 18,
**dadurch gekennzeichnet, dass** er ferner eine Seitenwand (10) aufweist, die insbesondere den hinteren Bereich des Sitzes umgibt.

20. Umwandelbarer Sitz nach Anspruch 19,
**dadurch gekennzeichnet, dass** zwischen der Seitenwand (10) und dem Rahmen (14) des Sitzes ein Gepäckraum vorgesehen ist.

21. Umwandelbarer Sitz nach Anspruch 20,
**dadurch gekennzeichnet, dass** der Gepäckraum eine seitliche Klappe (28) aufweist.

22. Umwandelbarer Sitz nach Anspruch 21,
**dadurch gekennzeichnet, dass** die seitliche Klappe eine Schiebeklappe (28) ist, die in einer im Wesentlichen vertikalen Ebene mit Hilfe einer im Wesentlichen horizontal verlaufenden Führungsschiene (30) verschiebbar ist, die von der Seitenwand (10) abgestützt wird.

23. Modul mit einem Sitz und einer den Sitz zumindest teilweise umgebenden Wand (10),
**dadurch gekennzeichnet , dass** der Sitz ein Sitz nach einem der Ansprüche 1 bis 22 ist.

24. Luftfahrzeug zum Transportieren von Passagieren,
**dadurch gekennzeichnet, dass** es zumindest einen umwandelbaren Sitz nach einem der Ansprüche 1 bis 22 aufweist.
